# EUROPEAN PATENT SPECIFICATION

(11) **EP 3 697 684 B1**
(45) Date of publication and mention of the grant of the patent: **31.03.2021**
(21) Application number: 18793328.8
(22) Date of filing: 02.10.2018
(51) Int. Cl.: B64C 29/00

(54) **LIFTING BODY VTOL AIRCRAFT**
SENKRECHTSTART- UND -LANDEFLUGZEUG MIT HEBEKÖRPER
AÉRONEF À DÉCOLLAGE ET ATTERRISSAGE VERTICAUX ET À CORPS PORTANT

(30) Priority: 16.10.2017 US 201762572984 P; 01.10.2018 US 201816149001
(43) Date of publication of application: 26.08.2020
(73) Proprietor: Mueller, John, Scottsdale, AZ 85251 (US)
(72) Inventor: Mueller, John, Scottsdale, AZ 85251 (US)
(74) Representative: Mader, Joachim
(86) International application number: PCT/US2018/053891
(87) International publication number: WO 2019/079028

(56) References cited:
- GB-A- 792 993
- GB-A- 2 469 612
- US-A- 3 658 279
- US-A- 6 073 881
- US-A1- 2015 298 805

## Description

### BACKGROUND OF THE INVENTION

This invention relates generally to aircraft and, in particular to vertical take-off and landing aircraft.

Aircraft that are capable of vertical take-off and landing fall generally into two categories. The first category consists of those with relatively low propulsive efficiency and high top speed such as the F 35 joint strike fighter and the Hawker Harrier. Because of the relatively low propulsive efficiency during vertical takeoff and landing attributable to the high-speed exhaust of their jet engines, these aircraft require a very large power to weight ratio to achieve vertical flight. The second category consists of aircraft with relatively high propulsive efficiency such as helicopters. Although helicopters are more efficient and can fly vertically with a much lower power to weight ratio, helicopters have a relatively low maximum top speed attributable to the need to prevent the advancing blade from entering the trans-sonic flight regime. Accordingly, what is needed is an aircraft having relatively high propulsive efficiency during vertical takeoff associated with a relatively modest exhaust speed while maintaining the ability to achieve supersonic flight in a horizontal flight mode. The document GB 792993A discloses an aircraft comprising a means for producing a high velocity gas flow directed through an opening in a wing onto a deflector plate which deflects the gas over the upper surface of the wing. Beneath the deflector plate is disposed a duct, connected by two additional ducts to two further ducts disposed along each side of the fuselage. Each of the further ducts lead from jet propulsion engines in the fuselage of the aircraft. Air intakes lead to the jet engines respectively. The wing may be an annulus, the radial cross section of which may be of an aerofoil shape. The document US 6 073 881 A shows a lift apparatus using the method of blowing air over the upper surface of the apparatus to generate lift by virtue of the balance of outside pressures against the body of the apparatus. The document US 3 658 279 A discloses a thrust vectoring, thrust reversing and lift augmentation system for a jet aircraft. The document US 2015/0298805 A1 discloses a VTOL aircraft with a low-temp planar jet flowing over the upper surface of the wing along the wingspan. The document GB 2469612 A discloses a VSTOL aircraft An aircraft having a gas turbine engine with vectorable cold and hot nozzles and is provided with ducting in the wing which extends from an inlet facing downwards to an outlet in the upper surface of the wing extending as a thin slot lengthwise of the wing and being directed rearwardly.

### SUMMARY OF THE INVENTION

The present invention solves the foregoing problem by providing a jet engine powered lifting-body vertical take-off and landing (VTOL) aircraft as defined in claim 1, with further embodiments being defined in the dependent claims. In an illustrative embodiment, the fuselage of the lifting-body comprises a substantially triangular or delta-shaped lifting body having airfoils disposed along all three sides. In vertical flight mode the airfoils act as exhaust diverters. A flow of exhaust gas flows from a centrally located vertical flight gas diffuser over the top surface of the lifting body and then is directed downward by the airfoils to provide the vertical lift necessary for vertical take-off. In horizontal flight mode, the airfoils act as canards and ailerons in cooperation with a conventional tail that includes vertical and horizontal stabilizers, elevators and a rudder.

Power for both vertical and horizontal flight is provided by a conventional jet engine, preferably a high-bypass turbofan engine, attached below the fuselage. In vertical flight mode, the entirety of the exhaust from the engine is diverted to the vertical flight gas diffuser by means of a transition duct that sealingly engages the exhaust outlet of the engine and diverts the flow of gas through a 90° upward bend into the vertical flight gas diffuser. The exhaust gas within the transition duct powers a multi-stage turbine that slows and cools the exhaust gas before entering the vertical flight gas diffuser. Power from the turbine is used to draw additional air into the vertical flight gas diffuser to further augment the volume while reducing the temperature of the exhaust gas exiting the vertical flight gas diffuser. The transition duct itself is movable from a first position in which it diverts the entirety of the engine exhaust into the vertical flight gas diffuser to a second position in which it partially obstructs and therefore diverts a portion of the engine exhaust into the vertical flight gas diffuser and finally to a third position in which it is fully retracted which permits the entirety of the engine thrust to be directed rearward to propel the aircraft in a horizontal flight mode.

### BRIEF DESCRIPTION OF THE DRAWING

The present invention will be better understood from a reading of the following detailed description, taken in conjunction with the accompanying drawing figures in which like references designate like elements and, in which:
**Fig. 1** is a front perspective view of a lifting body VTOL aircraft incorporating features of the present invention;
**Fig. 2** is a top view of the aircraft of figure 1;
**Fig. 3** is a cross-sectional view detailing the propulsion system of the aircraft of figure 1 in a first fully-deployed position;
**Fig. 4** is a cross-sectional view of the propulsion system of figure 3 in a second partially-retracted position; and
**Fig. 5** is a cross-sectional view of the propulsion system of figure 3 in a third fully-retracted position.

### DETAILED DESCRIPTION

The drawing figures are intended to illustrate the general manner of construction and are not necessarily to scale. In the detailed description and in the drawing figures, specific illustrative examples are shown and herein described in detail. It should be understood, however, that the drawing figures and detailed description are not intended to limit the invention to the particular form disclosed, but are merely illustrative and intended to teach one of ordinary skill how to make and/or use the invention claimed herein and for setting forth the best mode for carrying out the invention.

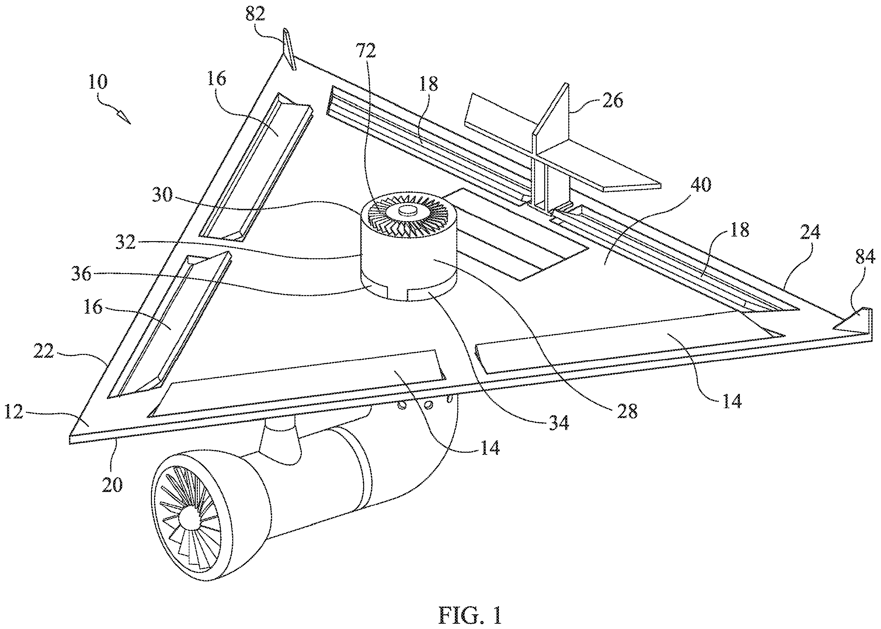

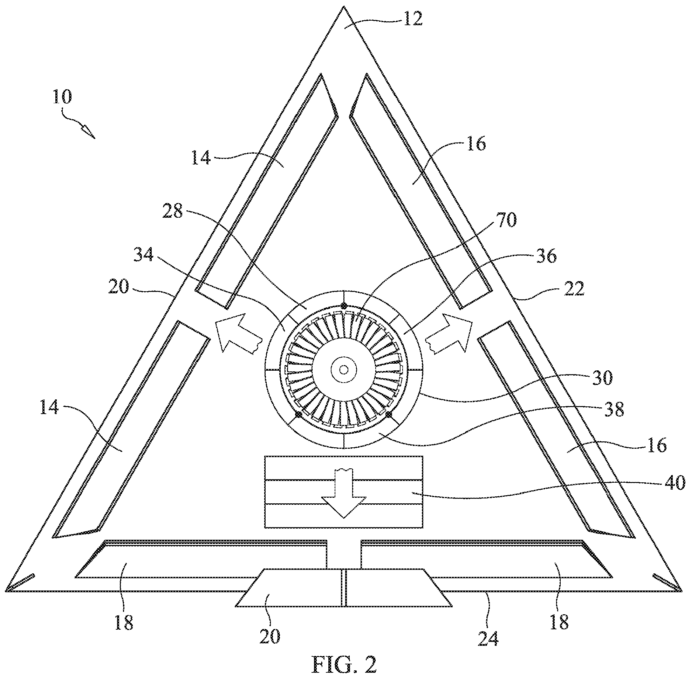

With reference to the figures, and in particular Figs. 1 and 2, a delta body vertical takeoff and landing (VTOL) aircraft 10 in accordance with the present invention comprises a fuselage 12, which in plan view has a substantially triangular shape, preferably the shape of an isosceles triangle and most preferably the shape of an equilateral triangle. The fuselage 12 may be fabricated from any appropriate lightweight material including aluminum, titanium, carbon fiber or the like. Airfoils 14, 16, 18 are arranged, one each, along the sides 20, 22, 24 of the fuselage. As described more fully hereinafter, airfoils 14, 16, 18 act as ailerons in horizontal flight mode and act as flow diverters in vertical flight mode.

A conventional tail assembly 26 comprising a horizontal stabilizer, vertical stabilizer, elevators and rudder for use in horizontal flight mode extends from side 24 of the fuselage. As explained more fully hereinafter, fuselage 12 further comprises a vertical flight gas diffuser 28, which comprises a cylindrical duct 30 having a centrally mounted compressor section 32 and a plurality of laterally-facing exhaust apertures 34, 36, 38.

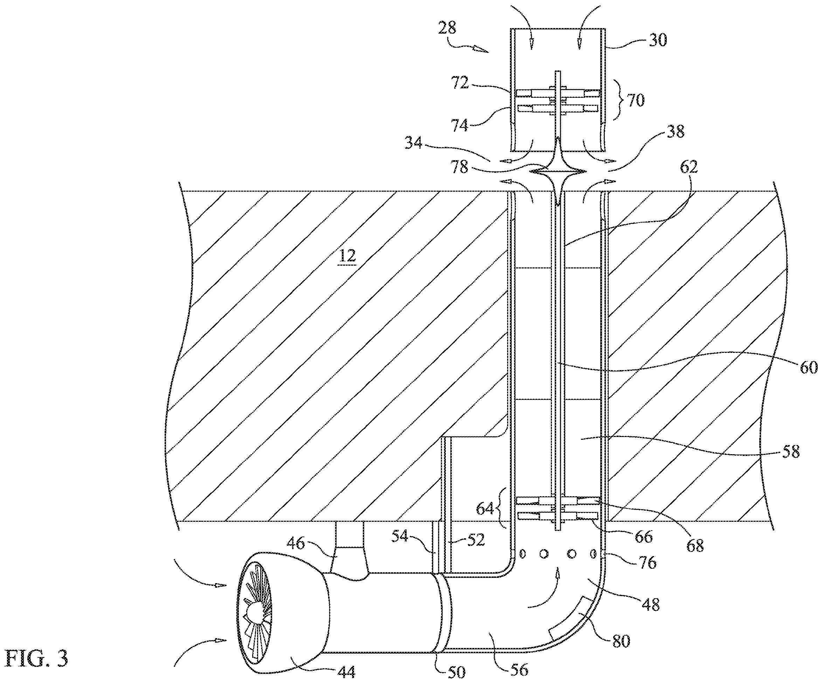

With additional reference to Fig. 3, which shows aircraft 10 in vertical flight mode, in the illustrative embodiment, power for both vertical and horizontal flight is provided by a single high-bypass turbo fan engine 44, such as a General Electric GE90 high-bypass turbofan aircraft engine having a thrust rating of at least 360 kN. Although in the illustrative embodiment a single high-bypass turbofan aircraft engine is employed, use of multiple high-bypass or low-bypass turbofan aircraft engines may be advantageously employed within the scope of the invention and, therefore, the invention disclosed herein is not limited to a single high-bypass engine. Engine 44 is supported by a pylon 46 which extends underneath fuselage 12. In vertical flight mode, the output from engine 44 is directed entirely into vertical flight gas diffuser 28 by a transition duct 48 which engages and is sealed with the exhaust outlet 50 of engine 44. Transition duct 48 is preferably constructed of a high temperature superalloy and may include bleed air orifices fed by the compressor section of engine 44 to maintain gas temperatures within transition duct 48 at acceptable levels, and/or may have a ceramic thermal barrier coating to enable transition duct 48 to withstand the extreme gas temperatures. Optionally, cooling baffles 72 may be located in areas of highest temperature in transition duct 48. In order to ensure a gas-tight seal and to reduce the reaction loads on transition duct 48, transition duct 48 includes a vertical sliding track member 52 that engages a corresponding vertical track 54 at the exhaust outlet 50 of engine 44.

Gas entering transition duct 48 is directed from the horizontal portion 56 of transition duct 48 through a 90° bend, into the vertical section 58 of transition duct 48, then into vertical flight gas diffuser 28. As the gas enters vertical section 58 of transition duct 48 it passes through a multi-stage axial turbine 64 comprising at least two counter-rotating turbine disks 66, 68 which, for reasons that will be more fully explain hereinafter, are mounted on telescoping shafts 60, 62. Shafts 60, 62 in turn power a multi-stage axial compressor 70 comprising at least two counter-rotating compressor wheels 72, 74. Compressor 70 draws air into vertical flight gas diffuser 28 to augment and reduce the temperature of the high-temperature gas from transition duct 48. This combined airflow is then directed radially outward from vertical flight gas diffuser 28 through exhaust apertures 34, 36, 38. A flow diverter 76 comprising a paraboloid body of revolution assists in redirecting the flow with minimal losses. The combined airflow exiting through exhaust apertures 34, 36, 38 flows outward over the top of fuselage 12 where it is directed downward by airfoils 14, 16, 18 as shown in figure 1. Passing the gas stream from engine 44 through axial turbine 64 has the effect of slowing and cooling the gas stream as work is extracted. Slowing the gas stream also improves the kinetic efficiency of the gas steam as it exits exhaust apertures 34, 36, 38 into the relatively stationary air surrounding vertical flight gas diffuser 28. Flow through exhaust apertures 34, 36, 38 may be throttled to control stability by any conventional means such as variable aperture nozzles. Additional flight stability in vertical flight mode is provided by a plurality of reaction jets 76, which comprise a radial array of nozzles in transition duct 48 which may be selectively opened or closed to provide additional stability control.

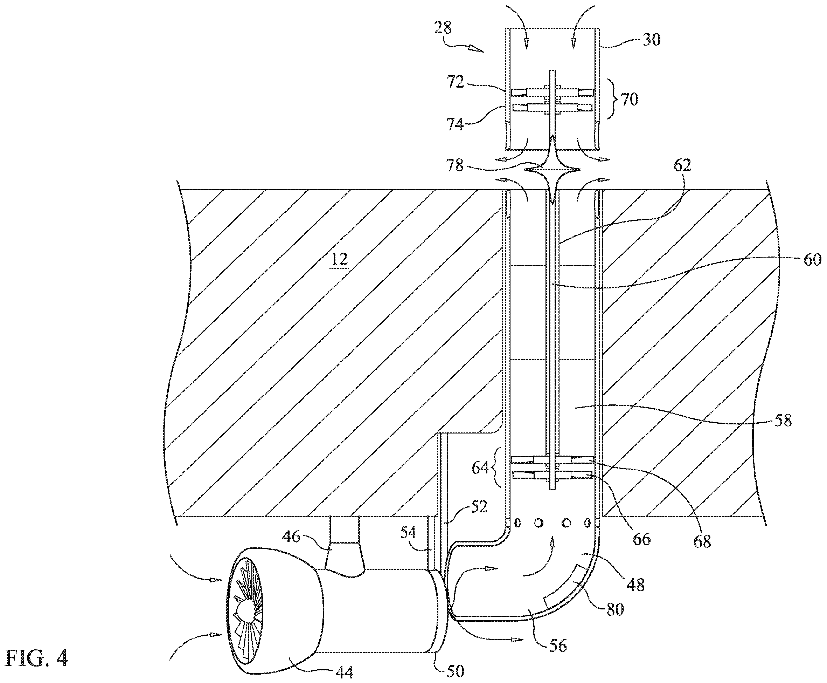

With additional reference to Fig. 4, aircraft 10 transitions from vertical flight mode to horizontal flight mode initially by withdrawing transition duct 48 partially upwards into fuselage 12. This enables a portion of the exhaust from engine 44 to be directed horizontally rather than the entirety of the exhaust entering transition duct 48. The portion of exhaust from engine 44 that does enter transition duct 48 continues to provide lift via vertical flight gas diffuser 28 as described hereinbefore. The portion of exhaust from engine 44 that does not enter transition duct 48 provides horizontal thrust for the purpose of transitioning to horizontal flight.

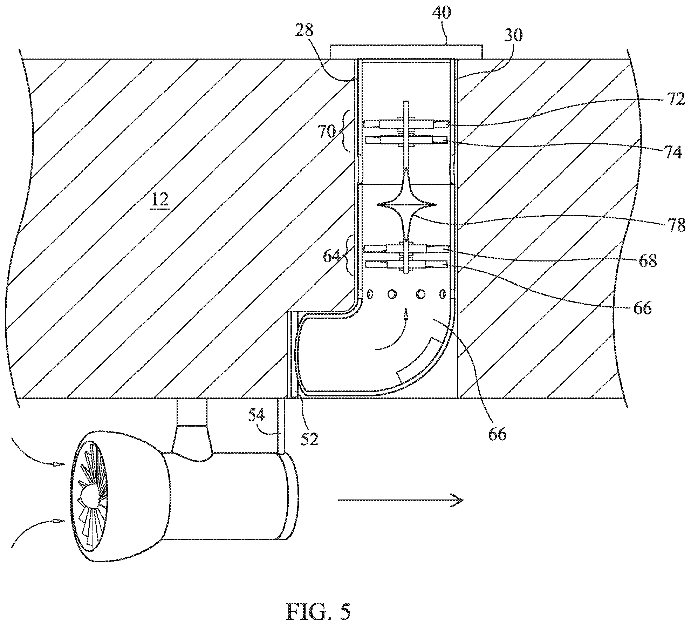

With additional reference to Fig. 5, after sufficient forward velocity has been attained for stable horizontal flight, aircraft 10 assumes a fully horizontal flight mode by withdrawing transition duct 48 fully into fuselage 12. Thereafter, aircraft 10 operates as a relatively conventional aerodynamic lifting-body aircraft with airfoils 14, 16 acting as canards to add additional lift and flight control, while and airfoils 18 become ailerons. Fuselage 12 may include winglets 82, 84 to reduce vortex shedding and thereby improve aerodynamic efficiency. To reduce drag, sliding or pivoting (bomb bay) doors may be employed to cover the retracted transition duct 48. Additionally, to reduce drag in horizontal flight mode, vertical flight gas diffuser 28 is retracted downward into fuselage 12.

Although certain illustrative embodiments and methods have been disclosed herein, it will be apparent from the foregoing disclosure to those skilled in the art that variations and modifications of such embodiments and methods may be made without departing from the invention. For example, although in the illustrative embodiment, the aircraft comprises a delta shaped fuselage, the inventive propulsion system may be used in combination with other airframes. Accordingly, it is intended that the invention should be limited only to the extent required by the appended claims and the rules and principles of applicable law. Additionally, as used herein, references to direction such as "up" or "down" as well as recited materials or methods of attachment are intended to be exemplary and are not considered as limiting the invention and, unless otherwise specifically defined, the terms "generally," "substantially," or "approximately" when used with mathematical concepts or measurements mean within ± 10 degrees of angle or within 10 percent of the measurement, whichever is greater. As used herein, a step of "providing" a structural element recited in a method claim means and includes obtaining, fabricating, purchasing, acquiring or otherwise gaining access to the structural element for performing the steps of the method. As used herein, the claim terms are to be given their broadest reasonable meaning unless a clear disavowal of that meaning appears in the record in substantially the following form ("As used herein the term ______ is defined to mean_____________").

## Claims

1. A vertical take off and landing (VTOL) aircraft (10) comprising:
a fuselage (12) comprising an aerodynamic lifting body having a top surface and a bottom surface;
an engine (44) comprising a turbofan jet engine attached under the bottom surface of the fuselage (12), the engine having an air inlet and an exhaust outlet (50), the exhaust outlet (50) exhausting a stream of hot gas in a rearward direction relative to the fuselage;
a vertical flight gas diffuser (28) comprising a cylindrical duct (30) having an open upper end extending from the top surface of the fuselage, the cylindrical duct (30) having a plurality of exhaust apertures (34, 36, 38) oriented radially outward for providing a flow of gas over the top surface of the fuselage (12) to provide lift in a vertical flight mode;
a transition duct (48) movable between at least a first, a second and a third position, the transition duct (48) having an inlet which, in the first position, sealingly engages the exhaust outlet (50) of the engine (44) and directs the stream of hot gas through a 90° upward bend into the vertical flight gas diffuser (28), in the second position the transition duct (48) partially engages the exhaust outlet (50) of the engine and directs a portion of the stream of hot gas through a 90° upward bend into the vertical flight gas diffuser (28) while allowing a portion of the stream of hot gas to be discharged rearward to provide a horizontal thrust component, and in the third position the transition duct (48) engages no portion of the exhaust outlet (50) of the engine (44), whereby the entirety of the engine thrust is directed rearward to propel the aircraft in a horizontal flight mode.

2. The aircraft (10) of claim 1, further comprising:
a turbine (64) disposed in the transition duct for extracting work from the stream of hot gas; and
a compressor (70) driven by the turbine (64) for drawing additional air into the vertical flight gas diffuser through the open upper end of the vertical flight gas diffuser (28).

3. The aircraft (10) of claim 2, wherein:
the lifting body comprises a substantially delta-shaped lifting body having three lateral sides (20, 22, 24).

4. The aircraft (10) of claim 3, further comprising:
a plurality of airfoils (14, 16, 18) disposed along the three lateral sides (20, 22, 24), the airfoils (14, 16, 18) operating to divert downward a flow of gas discharged from the vertical flight gas diffuser (28) over the top surface of the fuselage (12) in a vertical flight mode.

5. The aircraft (10) of claim 4, wherein:
plural of the plurality of airfoils (14, 16, 18) act as ailerons in a horizontal flight mode.

6. The aircraft (10) of claim 4, wherein
plural of the plurality of airfoils (14, 16, 18) act as canards in a horizontal flight mode.

## Patentansprüche

1. Ein senkrecht startendes und landendes (VTOL) Flugzeug (10), umfassend:
einen Rumpf (12) umfassend, einen aerodynamischen Tragkörper, der eine obere Fläche und eine untere Fläche aufweist;
ein Triebwerk (44), umfassend ein Turbofan-Düsentriebwerk, das unter der unteren Fläche des Rumpfes (12) befestigt ist, wobei das Triebwerk einen Lufteinlass und einen Abgasauslass (50) aufweist, der Abgasauslass (50) stößt einen Strom von heißem Gas in einer rückwärtigen Richtung relativ zum Rumpf aus;
einen Vertikalflug-Gasdiffusor (28) umfassend einen zylindrischen Kanal (30), der ein oberes offenes Ende aufweist, das sich von der oberen Fläche des Rumpfes erstreckt, der zylindrische Kanal (30) weist eine Mehrzahl von Auslassöffnungen (34, 36, 38) auf, die radial nach außen orientiert sind, um einen Gasstrom über die obere Fläche des Rumpfes (12) bereitzustellen, um in einem Vertikalflugmodus Auftrieb zu erzeugen;
einen Übergangskanal (48), der zwischen mindestens einer ersten, einer zweiten und einer dritten Position bewegbar ist, der Übergangskanal (48) weist einen Einlass auf, der in der ersten Position abdichtend mit dem Abgasauslass (50) des Triebwerks (44) in Verbindung steht und den Strom des heißen Gases durch eine 90°-Aufwärtsbiegung in den Vertikalflug-Gasdiffusor (28) lenkt, in der zweiten Position steht der Übergangskanal (48) teilweise mit dem Abgasauslass (50) des Triebwerks in Verbindung und leitet einen Teil des Heißgasstroms durch eine 90°-Aufwärtsbiegung in den Vertikalflug-Gasdiffusor (28), während einem Teil des Heißgasstroms erlaubt wird rückwärts ausgestoßen zu werden, um eine horizontale Schubkomponente bereitzustellen, und in der dritten Position steht der Übergangskanal (48) mit keinem Teil des Abgasauslasses (50) des Triebwerks (44) in Verbindung, wodurch der gesamte Triebwerksschub rückwärts geleitet wird, um das Flugzeug in einem Horizontalflugmodus anzutreiben.

2. Das Flugzeug (10) nach Anspruch 1, ferner umfassend:
eine Turbine (64), die in dem Übergangskanal angeordnet ist, um Arbeit aus dem Heißgasstrom zu extrahieren; und
einen Kompressor (70), der von der Turbine (64) angetrieben wird, um zusätzliche Luft durch das offene obere Ende des Vertikalflug-Gasdiffusors (28) in den Vertikalflug-Gasdiffusor zu ziehen.

3. Das Flugzeug (10) nach Anspruch 2, wobei:
der Tragkörper einen im Wesentlichen deltaförmigen Tragkörper mit drei Seitenflächen (20, 22, 24) umfasst.

4. Das Flugzeug (10) nach Anspruch 3, ferner umfassend:
eine Mehrzahl von Tragflächen (14, 16, 18), die entlang der drei seitlichen Seiten (20, 22, 24) angeordnet sind, wobei die Tragflächen (14, 16, 18) wirken, um einen von dem Vertikalflug-Gasdiffusor (28) abgegebenen Gasstrom über die obere Fläche des Rumpfes (12) in einem Vertikalflugmodus nach unten abzulenken.

5. Flugzeug (10) nach Anspruch 4, wobei:
mehrere der Mehrzahl von Tragflächen (14, 16, 18) als Querruder in einem horizontalen Flugmodus wirken.

6. Flugzeug (10) nach Anspruch 4, wobei
mehrere der Mehrzahl von Tragflächen (14, 16, 18) als Canards in einem horizontalen Flugmodus wirken.

## Revendications

1. Un aéronef (10) à décollage et atterrissage verticaux (VTOL), comprenant :
un fuselage (12) comprenant un corps portant aérodynamique avec une surface de dessus et une surface de dessous ;
un moteur (44) comprenant un moteur à turboréacteur double flux fixé sous la surface de dessous du fuselage (12), le moteur ayant une entrée d'air et une sortie d'échappement (50), la sortie d'échappement (50) laissant échapper un flux de gaz chauds dans une direction vers l'arrière par rapport au fuselage ;
un diffuseur de gaz en vol vertical (28) comprenant un carénage cylindrique (30) avec une extrémité supérieure ouverte s'étendant à partir de la surface de dessus du fuselage, le carénage cylindrique (30) possédant une pluralité d'ouvertures d'échappement (34, 36, 38) orientées radialement vers l'extérieur pour produire un flux de gaz au-dessus de la surface de dessus du fuselage (12) pour assurer une portance dans un mode en vol vertical ;
un carénage de transition (48) mobile entre au moins une première, une seconde et une troisième positions, le carénage de transition (48) possédant une entrée qui, dans la première position, s'associe de façon étanche à la sortie d'échappement (50) du moteur (44) et dirige le flux de gaz chauds au travers d'un coude à 90° vers le haut dans le diffuseur de gaz en vol vertical (28), dans la seconde position le carénage de transition (48) s'associe partiellement à l'orifice d'échappement (50) du moteur et dirige une partie du flux de gaz chauds au travers d'un coude à 90° vers le haut en direction du diffuseur de gaz en vol vertical (28) tout en permettant à une partie du flux de gaz chauds d'être évacuée vers l'arrière pour produire une composante de poussée horizontale, et dans la troisième position le carénage de transition (48) ne s'associe à aucune partie de la sortie d'échappement (50) du moteur, de sorte que la totalité de la poussée du moteur soit dirigée vers l'arrière pour propulser l'aéronef dans un mode en vol horizontal.

2. L'aéronef (10) de la revendication 1, comprenant en outre :
une turbine (64) disposée dans le carénage de transition pour extraire du travail du flux de gaz chauds ; et
un compresseur (70) entraîné par la turbine (64) pour aspirer de l'air additionnel en direction du diffuseur de gaz en vol vertical au travers de l'extrémité supérieure ouverte du diffuseur de gaz en vol vertical (28).

3. L'aéronef (10) de la revendication 2, dans lequel :
le corps portant comprend un corps portant sensiblement en forme de delta avec trois côtés latéraux (20, 22, 24).

4. L'aéronef (10) de la revendication 3, comprenant en outre :
une pluralité de surfaces de sustentation (14, 16, 18) disposées le long des trois côtés latéraux (20, 22, 24), les surfaces de sustentation (14, 16, 18) fonctionnant de manière à détourner vers le bas un flux de gaz évacués par le diffuseur de gaz en vol vertical (28) au-dessus de la surface de dessus du fuselage (12) dans un mode en vol vertical.

5. L'aéronef (10) de la revendication 4, dans lequel :
plusieurs surfaces de la pluralité de surfaces de sustentation (14, 16, 18) jouent le rôle d'ailerons dans un mode en vol horizontal.

6. L'aéronef (10) de la revendication 4, dans lequel :
plusieurs surfaces de la pluralité de surfaces de sustentation (14, 16, 18) jouent le rôle de surfaces canard dans un mode en vol horizontal.
